(19) Europäisches Patentamt
European Patent Office
Office européen des brevets

(11) Veröffentlichungsnummer: **0 321 824**
**A2**

# (12) EUROPÄISCHE PATENTANMELDUNG

(21) Anmeldenummer: 88120749.2

(22) Anmeldetag: **12.12.88**

(51) Int. Cl.4: **C08G 59/14 , C08G 59/04 , C08G 59/17 , H01B 3/40**

(30) Priorität: **23.12.87 DE 3743994**

(43) Veröffentlichungstag der Anmeldung: **28.06.89 Patentblatt 89/26**

(84) Benannte Vertragsstaaten: **DE FR GB IT**

(71) Anmelder: **Siemens Aktiengesellschaft Berlin und München**
**Wittelsbacherplatz 2**
**D-8000 München 2(DE)**

(72) Erfinder: **Birkle, Siegfried, Dr.**
**Veit-Stross-Strasse 46**
**D-8552 Höchstadt(DE)**
Erfinder: **Kamps, Rainer, Dr.**
**Sauerbruchstrasse 9**
**D-8630 Coburg(DE)**
Erfinder: **Feucht, Hans-Dieter, Dr.**
**Eschenweg 7**
**D-7253 Renningen 2(DE)**
Erfinder: **Rissel, Eva-Maria**
**Lindenweg 19**
**D-8550 Forchheim(DE)**

## (54) Flüssiges, strahlenhärtbares Harz zur Isolierung dünner Leitungen.

(57) Zur Isolierung dünner Leitungen verwendete Harze sollen eine hohe Strahlenempfindlichkeit aufweisen und bei Applikationstemperatur flüssig sein; sie sollen ferner die Herstellung dielektrisch hochwertiger Isolationen ermöglichen.

Dies wird durch ein Harz erreicht, das ein Reaktionsprodukt von (Meth)acrylsäure oder Isocyanatoalkyl-(meth)-acrylat mit einem 1:2-Addukt aus einem niedermolekularen Diepoxid und einem α,ω-Diol mit einem mittleren Molekulargewicht ≦ 2000 oder einem einwertigen Alkohol mit einem mittleren Molekulargewicht ≦ 300 ist, wobei das Diepoxid ein aromatischer Diglycidylether, ein aliphatisches oder cycloaliphatisches Diepoxid oder ein siliciumorganisches Diepoxid ist und ein mittleres Molekulargewicht ≦ 400 aufweist, und wobei das α,ω-Diol ein α,ω-hydroxyterminiertes Polyoxyalkylen (außer Polyethylenglykol), ein α,ω-hydroxyterminiertes Polybutadien, ein α,ω-hydroxyterminiertes organofunktionelles Polysiloxan oder ein α,ω-Alkandiol mit einem mittleren Molekulargewicht ≦ 200 ist.

EP 0 321 824 A2

## Flüssiges, strahlenhärtbares Harz zur Isolierung dünner Leitungen

Die Erfindung betrifft ein flüssiges, strahlenhärtbares Harz zur Isolierung dünner Leitungen, eine daraus hergestellte Isolation und eine dünne Leitung mit dieser Isolation.

Dünne isolierte elektrische Leitungen, d.h. Leitungen mit einem Durchmesser ≦ 100 µm, finden vor allem in der Steuerungs- und Nachrichtentechnik Verwendung. Derartige Leitungen benötigen eine dielektrisch hochwertige Isolation. Die Isolierung der Leitungen, d.h. das Aufbringen der Kunststoff-Isolation, kann beispielsweise durch Extrusion erfolgen, wobei Thermoplaste verwendet werden. Von Nachteil ist dabei aber, daß in der Regel die mechanische Festigkeit der Leitungen nicht ausreichend ist.

Geringere Ansprüche an die mechanische Festigkeit der Leitungen ergeben sich dann, wenn diese in einer Küvette mit einem Flüssigharz beschichtet werden, das nachfolgend einer Strahlenhärtung unterworfen wird. Hierzu fehlt es bislang aber an geeigneten Harzen mit den erforderlichen Eigenschaften, wie Strahlenhärtbarkeit.

Aufgabe der Erfindung ist es, ein zur Isolierung dünner Leitungen geeignetes Harz anzugeben, das eine hohe Strahlenempfindlichkeit aufweist und bei Applikationstemperatur flüssig, d.h. im wesentlichen frei von Lösungsmittel ist, und das die Herstellung von dielektrisch hochwertigen Isolationen ermöglicht.

Dies wird erfindungsgemäß dadurch erreicht, daß das Harz ein Reaktionsprodukt von (Meth)acrylsäure oder Isocyanatoalkyl- (meth)acrylat mit einem 1:2-Addukt aus einem niedermolekularen Diepoxid und einem α,ω-Diol mit einem mittleren Molekulargewicht ≦ 2000 oder einem einwertigen Alkohol mit einem mittleren Molekulargewicht ≦ 300 ist, wobei das Diepoxid ein aromatischer Diglycidylether, ein aliphatisches oder cycloaliphatisches Diepoxid oder ein siliciumorganisches Diepoxid ist und ein mittleres Molekulargewicht ≦ 400 aufweist, und wobei das α,ω-Diol ein α,ω-hydroxyterminiertes Polyoxyalkylen (außer Polyethylenglykol), ein α,ω-hydroxyterminiertes Polybutadien, ein α,ω-hydroxyterminiertes organofunktionelles Polysiloxan oder ein α,ω-Alkandiol mit einem mittleren Molekulargewicht ≦ 200 ist.

Als niedermolekulare Diepoxide bzw. als α,ω-Diole dienen vorzugsweise folgende Verbindungen:

- Bisphenol A- oder Bisphenol F-Diglycidylether (als aromatischer Diglycidylether);
- 1.2.7.8-Diepoxyoctan (als aliphatisches Diepoxid);
- 3.4-Epoxycyclohexylmethyl-3′.4′-epoxycyclohexancarboxylat (als cycloaliphatisches Diepoxid);
- Bis-(3-glycidoxypropyl)-tetramethyldisiloxan (als siliciumorganisches Diepoxid);
- Polytetrahydrofuran oder Polypropylenglykol (als α,ω-hydroxyterminiertes Polyoxyalkylen);
- lineares Polydimethylsiloxan mit endständigen primären Hydroxyalkylgruppen (als α,ω-hydroxyterminiertes organofunktionelles Polysiloxan);
- Ethylenglykol, 1.3-Propandiol, 1.4-Butandiol oder 1.10-Decandiol (als α,ω-Alkandiol).

1:2-Addukte, die durch Umsetzung von Diepoxiden (Formel I) mit α,ω-Diolen (Formel II) gebildet werden, besitzen eine Struktur entsprechend der allgemeinen Formel III:

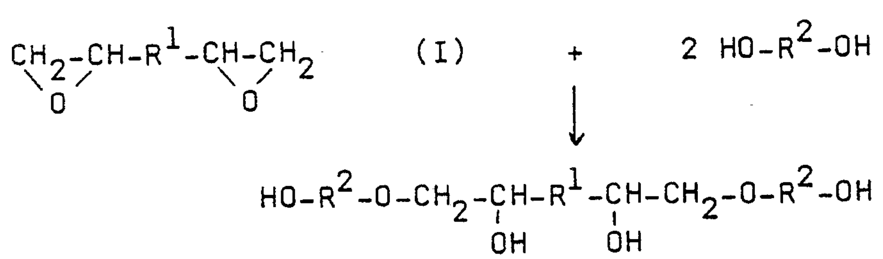
(I) + (II) (III)

Cycloaliphatische Diepoxide ergeben dabei beispielsweise 1:2-Addukte entsprechend der allgemeinen Formel IV (sowie entsprechende Isomere):

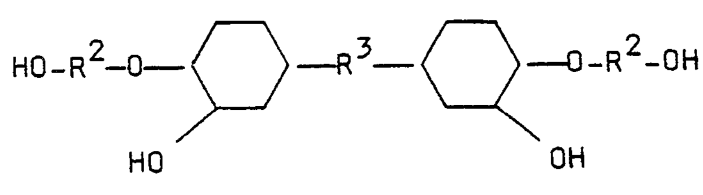
(IV)

1:2-Addukte, die durch Umsetzung von Diepoxiden (Formel I) mit einwertigen Alkoholen (Formel V) gebildet

werden, besitzen eine Struktur entsprechend der allgemeinen Formel VI:

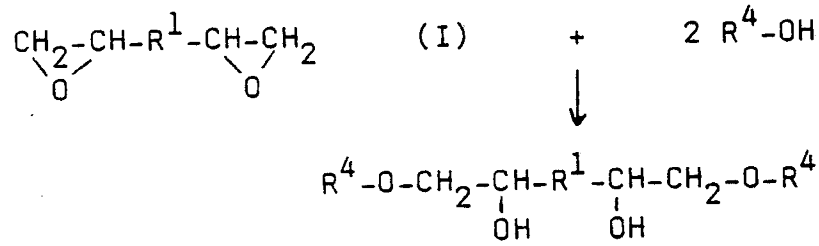

(I) (V) (VI)

Zur Herstellung der 1:2-Addukte werden das Diepoxid und das Diol bzw. der einwertige Alkohol in einem niedrigsiedenden organischen Lösungsmittel (wie Trichlormethan) bei erhöhter Temperatur ( 80 °C) in Gegenwart eines sauren Katalysators (wie Trifluormethansulfonsäure) miteinander zur Reaktion gebracht. Das Verhältnis von Diepoxid zu Diol liegt dabei zwischen 1:2 und 1:6; auch der einwertige Alkohol kann im Überschuß eingesetzt werden, d.h. hierbei ist das Verhältnis 1:2 oder größer. Insbesondere bei der Umsetzung mit Diolen kann das Reaktionsprodukt - neben dem 1:2-Addukt - geringe Anteile an Oligomeren enthalten, beispielsweise folgender Struktur:

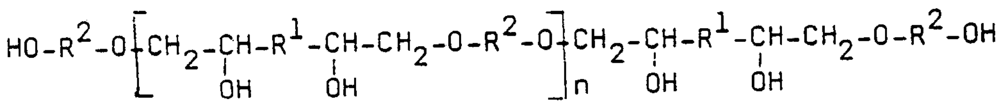

(IIIa)

Die 1:2-Addukte werden dann (a) mit Acrylsäure oder Methacrylsäure oder (b) mit Isocyanatoalkyl-acrylat bzw. -methacrylat zur Reaktion gebracht, wobei - unter Ankopplung strahlenhärtbarer Gruppen - die strahlenhärtbaren Harze gebildet werden, und zwar in folgender Weise:

(a)

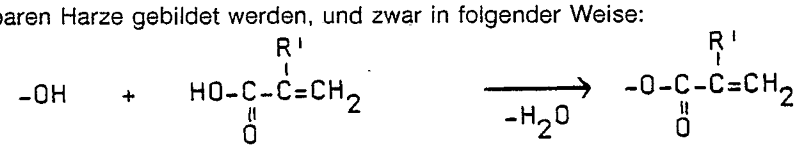


z.B. in (III) $R' = H, CH_3$

(b)

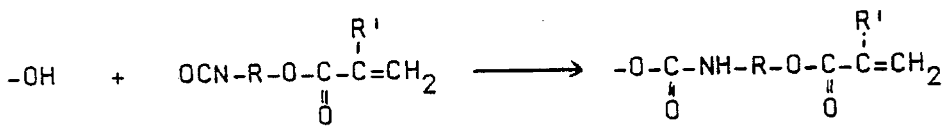

z.B. in (III) $R$ = Alkylen

$R' = H, CH_3$

Zur Herstellung der erfindungsgemäßen Harze dienen sehr reine Ausgangsverbindungen, insbesondere sehr reine Diepoxide, d.h. Substanzen mit einer niedrigen Dielektrizitätszahl. Aufgrund dieser Tatsache und aufgrund des speziellen Aufbauprinzips, wonach im wesentlichen nur Additionsreaktionen erfolgen, bei denen keine - die Dielektrizitätszahl nachteilig beeinflussenden - Nebenprodukte entstehen, fallen die erfindungsgemäßen Harze sehr rein an, und zwar ohne aufwendige Reinigungsoperationen. Die aus diesen Harzen durch Strahlenhärtung hergestellten Isolationen sind deshalb dielektrisch hochwertig, d.h. sie weisen eine Dielektrizitätszahl $Er \leq 6{,}5$ auf und der dielektrische Verlustfaktor $\tan\delta$ ist annähernd $10^{-2}$.

Die erfindungsgemäßen Harze sind flüssig, d.h. sie können lösungsmittelfrei verarbeitet werden, darüber hinaus sind sie hochempfindlich gegenüber Strahlung, wie Elektronen- und UV-Strahlung. Aus diesen Harzen können - durch geeignete Kombination der Ausgangskomponenten, d.h. Diepoxid und Diol bzw. einwertiger Alkohol, sowie durch die Anzahl der an das 1:2-Addukt angekoppelten strahlenhärtbaren Gruppen - außerdem sowohl harte als auch weiche flexible Isolationen (Dehnung > 50 %) erhalten werden. Werden im übrigen nicht alle Hydroxylgruppen des 1:2-Adduktes zur Ankopplung der strahlenhärtbaren Gruppen herangezogen, so werden die freien Hydroxylgruppen vorteilhaft mit einem Isocyanat verkappt, d.h. umgesetzt, vorzugsweise mit Phenylisocyanat.

Anhand von Ausführungsbeispielen soll die Erfindung noch näher erläutert werden.

Beispiel 1

In einen 1 l-Vierhalskolben (mit Rührer, Innenthermometer, Tropftrichter und Rückflußkühler mit Trockenrohr) werden 200 g eines im Handel erhältlichen Polytetrahydrofurans mit einem mittleren Molekulargewicht von 250 (≙1,6 mol -OH) und 150 g trockenes Trichlormethan, stabilisiert mit 2-Methyl-buten-2, gegeben. Nach der Zugabe von ca. 1 ml Trifluormethansulfonsäure als Katalysator wird das Gemisch auf ca. 60 °C erwärmt, dann werden innerhalb einer Stunde 136 g Bisphenol A-Diglycidylether (≙0,8 mol Epoxid), gelöst in 100 g trockenem Trichlormethan, unter Rühren zugetropft. Das Reaktionsgemisch wird anschließend bei 60 °C so lange gerührt, bis kein Epoxid mehr nachweisbar ist. Nach dem Abkühlen werden 10 g vernetztes Poly(4-vinylpyridin) zugesetzt und dann wird 6 h bei Raumtemperatur gerührt. Anschließend wird abgesaugt und danach über ein 0,8 µm-Membranfilter druckfiltriert. Das Lösungsmittel wird dann im Vakuum bei einer Badtemperatur von ca. 80 °C entfernt. Es werden ca. 315 g eines 1:2-Adduktes aus dem Bisphenol A-Diglycidylether und dem Polytetrahydrofuran in Form eines klaren, leicht gelblichen Öls erhalten (OH-Wert: 0,469 mol/100 g).

In einen 500 ml-Dreihalskolben (mit Innenthermometer, Tropftrichter, Trockenrohr und einem Magnetrührstäbchen) werden 100 g des in der vorstehend beschriebenen Weise erhaltenen 1:2-Adduktes, gelöst in 100 g trockenem Trichlormethan, gegeben. Nach der Zugabe von ca. 0,5 ml einer Dibutylzinndilauratlösung (10 g in 100 ml $CHCl_3$) als Katalysator werden 72,8 g Isocyanatoethyl-methacrylat (≙0,469 mol -NC0), gelöst in 50 g trockenem Trichlormethan, innerhalb einer Stunde bei Raumtemperatur unter Rühren zugetropft; die Reaktionstemperatur soll dabei 30 °C nicht überschreiten. Das Reaktionsgemisch wird dann bei Raumtemperatur so lange gerührt, bis kein Isocyanat mehr nachweisbar ist. Anschließend wird das Lösungsmittel im Vakuum bei einer Badtemperatur von 40 °C entfernt. Es werden ca. 170 g eines klaren, leicht gelblichen Harzes mit einer Viskosität von ca. 11000 mPa.s (bei 23 °C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien mit einer Dielektrizitätszahl $E_r$ von 5.3 und einem Verlustfaktor $\tan\delta$ von $4,8.10^{-2}$ erhalten.

Beispiel 2

In einen 1 l-Vierhalskolben (mit Rührer, Innenthermometer, Tropftrichter und Rückflußkühler mit Trockenrohr) werden 300 g eines im Handel erhältlichen Polytetrahydrofurans mit einem mittleren Molekulargewicht von 650 (≙0,923 mol -OH), gelöst in 200 g trockenem Trichlormethan, gegeben. Nach der Zugabe von ca. 1 ml Trifluormethansulfonsäure wird das Gemisch auf ca. 60 °C erwärmt, dann werden innerhalb von 30 min 78,5 g Bisphe nol A-Diglycidylether (≙0,462 mol Epoxid), gelöst in 100 g trockenem Trichlormethan, zugetropft. Das Reaktionsgemisch wird anschließend bei 60 °C so lange gerührt, bis kein Epoxid mehr nachweisbar ist. Nach dem Abkühlen werden 10 g vernetztes Poly(4-vinylpyridin) zugesetzt und dann wird 6 h bei Raumtemperatur gerührt. Anschließend wird abgesaugt und danach über ein 0,8 µm-Membranfilter druckfiltriert. Das Lösungsmittel wird dann im Vakuum bei einer Badtemperatur von ca. 80 °C entfernt.

Es werden ca. 300 g eines 1:2-Adduktes aus dem Bisphenol A-Diglycidylether und dem Polytetrahydrofuran in Form eines klaren, leicht gelblichen Öls erhalten (OH-Wert: 0,222 mol/100g).

In einen 500 ml-Dreihalskolben (mit Innenthermometer, Tropfrichter, Trockenrohr und einem Magnetrührstäbchen) werden 100 g des in der vorstehend beschriebenen Weise hergestellten 1:2- Adduktes, gelöst in 100 g trockenem Trichlormethan, gegeben. Nach der Zugabe von ca. 0,5 ml einer Dibutylzinndilauratlösung werden 34,4 g Isocyanatoethyl-methacrylat (≙0,222 mol -NCO), gelöst in 30 g trockenem Trichlormethan, innerhalb von 30 min bei Raumtemperatur unter Rühren zugetropft. Das Reaktionsgemisch wird bei Raumtemperatur so lange gerührt, bis kein Isocyanat mehr nachweisbar ist. Anschließend wird das Lösungsmittel im Vakuum bei einer Badtemperatur von 40 °C entfernt. Es werden ca. 130 g eines klaren, leicht gelblichen Harzes mit einer Viskosität von ca. 14000 mPa.s (bei 23 °C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien mit einer Dielektrizitätszahl $E_r$ von 5,5 und einem Verlustfaktor $\tan\delta$ von $4.10^{-2}$ erhalten.

Beispiel 3

Entsprechend Beispiel 1 werden 200 g eines im Handel erhältli chen Polytetrahydrofurans mit einem mittleren Molekulargewicht von 2000 (≙0,2 mol -OH), gelöst in 150 g trockenem Trichlormethan, in Gegenwart von ca. 1 ml Trifluormethansulfonsäure innerhalb von 20 min mit 179 g Bisphenol A-Diglycidylether (≙0,1 mol Epoxid), gelöst in 20 g trockenem Trichlormethan, zur Reaktion gebracht. Das Reaktionsgemisch wird dann entsprechend Beispiel 1 weiterbehandelt und aufgearbeitet. Es werden ca. 190 g eines 1:2-Adduktes aus dem Bisphenol A-Diglycidylether und dem Polytetrahydrofuran in Form eines klaren, leicht gelblichen Öls erhalten (OH-Wert: 0,142 mol/100 g).

Entsprechend Beispiel 1 werden 100 g des in der vorstehend beschriebenen Weise erhaltenen 1:2-Adduktes, gelöst in 100 g trockenem Trichlormethan, in Gegenwart von ca. 0,5 ml Dibutylzinndilauratlösung innerhalb von 20 min mit 22,1 g Isocyanatoethyl-methacrylat (≙0,142 mol -NCO), gelöst in 20 g trockenem Trichlormethan, zur Reaktion gebracht. Das Reaktionsgemisch wird dann entsprechend Beispiel 1 weiterbehandelt und aufgearbeitet. Es werden ca. 120 g eines klaren, leicht gelblichen Harzes mit einer Viskosität von ca. 12000 mPa.s (bei 23° C) erhalten. Nach einer Lagerung von einigen Wochen kristallisiert das Reaktionsprodukt, es kann jedoch problemlos wieder aufgeschmolzen werden.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien mit einer Dielektrizitätszahl $E_r$ von 6,3 und einem Verlustfaktor $\tan\delta$ von $3{,}7.10^{-2}$ erhalten.

Beispiel 4

In einen 1 l-Dreihalskolben (mit Rührer, Innenthermometer und Rückflußkühler mit Trockenrohr) werden 24 g 3.4-Epoxycyclohexyl-3′.4′-epoxycyclohexancarboxylat (≙0,175 mol Epoxid) und 350 g Polytetrahydrofuran mit einem mittleren Molekulargewicht von 2000 (≙0,35 mol -OH), gelöst in 300 g trockenem Trichlormethan, gegeben. Nach der Zugabe von ca. 0,5 ml Trifluormethansulfonsäure wird das Gemisch unter Rühren auf ca. 60° C e rwärmt. Das Reaktionsgemisch wird dann bei dieser Temperatur so lange gerührt, bis kein Epoxid mehr nachweisbar ist. Nach dem Abkühlen werden 5 g vernetztes Poly(4-vinylpyridin) zugesetzt und dann wird 6 h bei Raumtemperatur gerührt. Anschließend wird abgesaugt und danach über ein 0,8 µm-Membranfilter druckfiltriert. Das Lösungsmittel wird dann im Vakuum bei einer Badtemperatur von ca. 80° C entfernt. Es werden ca. 350 g eines 1:2-Adduktes aus dem Diepoxid und dem Polytetrahydrofuran in Form eines weißen, festen Produktes mit einem Schmelzpunkt von 34° C erhalten (OH-Wert: 0,112 mol/100 g).

Entsprechend Beispiel 1 werden 100 g des in der vorstehend beschriebenen Weise erhaltenen 1:2-Adduktes, gelöst in 100 g trockenem Trichlormethan, in Gegenwart von ca. 0,5 ml einer Dibutylzinndilauratlösung innerhalb von 20 min mit 17,3 g Isocyanatoethyl-methacrylat (≙0,112 mol -NCO), gelöst in 20 g trockenem Trichlormethan, zur Reaktion gebracht. Das Reaktionsgemisch wird dann entsprechend Beispiel 1 weiterbehandelt und aufgearbeitet. Es werden ca. 115 g eines klaren, farblosen Harzes mit einer Viskosität von ca. 21000 mPa.s (bei 23° C) erhalten. Nach einer Lagerung von einigen Wochen kristallisiert das Reaktionsprodukt; der Feststoff besitzt einen Schmelzpunkt von 32° C.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare, weiche, gummiartige Folien mit einer Dielektrizitätszahl $E_r$ von 5,2 und einem Verlustfaktor $\tan\delta$ von $1.10^{-2}$ erhalten.

Beispiel 5

In einen 1 1-Vierhalskolben (mit Rührer, Innenthermometer, Tropftrichter und Rückflußkühler) werden 74 g 1-Butanol (≙1 mol -OH) zusammen mit ca. 0,5 ml Trifluormethansulfonsäure und 500 g trockenem Trichlormethan gegeben. Das Gemisch wird auf ca. 60° C erwärmt, dann werden innerhalb von 30 min 181 g eines im Handel erhältlichen Bis-(3-glycidoxypropyl)-tetramethyldisiloxans (≙0,5 mol Epoxid), gelöst in 500 g Trichlormethan, unter Rühren zugetropft. Das Reaktionsgemisch wird anschließend bei 60° C so lange gerührt, bis ein Restepoxidgehalt < 0,5 % erreicht ist. Das Lösungsmittel wird dann im Vakuum bei einer Badtemperatur von ca. 60° C entfernt. Es werden ca. 226 g eines 1:2-Adduktes aus dem siliciumorganischen Diepoxid und dem Butanol in Form eines klaren Öls erhalten (OH-Wert: 0,306 mol/100 g).

Entsprechend Beispiel 1 werden 100 g des in der vorstehend beschreibenen Weise erhaltenen 1:2-Adduktes, gelöst in 150 g trockenem Trichlormethan, in Gegenwart von ca. 0,5 ml Dibutylzinndilauratlösung

innerhalb von 90 min mit 47,5 g Isocyanatoethyl-methacrylat (≙0,306 mol -NCO), gelöst in 50 g trockenem Trichlormethan, zur Reaktion gebracht. Das Reaktionsgemisch wird dann entsprechend Beispiel 1 weiterbehandelt und aufgearbeitet. Es werden ca. 145 g eines klaren, farblosen Harzes mit einer Viskosität von ca. 1100 mPa.s (bei 23°C) erhalten.

Aus einer Probe des Harzes wird eine Schicht von ca. 300 µm gegossen und unter Stickstoff mit Elektronenstrahlen ausgehärtet (Beschleunigungsspannung: 1 MeV; Dosis: 25 kGy). Es werden elastische, reißfeste, biegbare Folien mit einer Dielektrizitätszahl $E_r$ von 4,2 und einem Verlustfaktor tanδ von $2{,}5.10^{-2}$ sowie einer Glasübergangstemperatur von 65°C erhalten.

Beispiel 6

In einen 1 l-Vierhalskolben (mit Rührer, Innenthermometer, Tropftrichter und Rückflußkühler mit Trockenrohr) werden 158 g 1-Decanol (≙1 mol -OH) zusammen mit ca. 0,2 ml Trifluormethansulfonsäure und 100 g trockenem Trichlormethan gegeben. Das Gemisch wird auf ca. 60° erwärmt, dann werden innerhalb einer Stunde 170 g Bisphenol A-Diglycidylether (≙1 mol Epoxid), gelöst in 200 g trockenem Trichlormethan, unter Rühren zugetropft. Das Reaktionsgemisch wird anschließend bei 60°C so lange gerührt, bis kein Epoxid mehr nachweisbar ist. Nach dem Abkühlen werden 10 g vernetztes Poly(4-vinylpyridin) zugesetzt und dann wird 6 h bei Raumtemperatur gerührt. Anschließend wird abgesaugt und danach über ein 0,8 µm-Membranfilter druckfiltriert. Das Lösungsmittel wird dann im Vakuum bei einer Badtemperatur von ca. 60°C entfernt. Es werden ca. 300 g eines 1:2- Adduktes aus dem Bisphenol A-Diglycidylether und dem Decanol in Form eines klaren, leicht gelblichen Öls erhalten (OH-Wert: 0,31 mol/100 g).

Entsprechend Beispiel 1 werden 100 g des in der vorstehend beschriebenen Weise erhaltenen 1:2-Adduktes, gelöst in 100 g trockenem Trichlormethan, in Gegenwart von ca. 1 ml Dibutylzinndilauratlösung innerhalb einer Stunde zunächst mit 23,6 g Isocyanatoethyl-methacrylat (≙0,152 mol -NCO) und dann mit 18,1 g Phenylisocyanat (≙0,152 mol -NCO), gelöst in 100 g trockenem Trichlormethan, zur Reaktion gebracht; die Reaktionstemperatur soll dabei 30°C nicht überschreiten. Das Reaktionsgemisch wird dann entsprechend Beispiel 1 weiterbehandelt und aufgearbeitet. Es werden ca. 140 g eines klaren, leicht gelblichen Harzes mit einer Viskosität von ca. 5500 mPa.s (bei 23°C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien mit einer Dielektrizitätszahl $E_r$ von 4,5 und einem Verlustfaktor tanδ von $7{,}6.10^{-2}$ erhalten; die Reißdehnung beträgt 50 %.

## Ansprüche

1. Flüssiges, strahlenhärtbares Harz zur Isolierung dünner Leitungen, **dadurch gekennzeichnet,** daß es ein Reaktionsprodukt von (Meth)acrylsäure oder Isocyanatoalkyl-(meth)acrylat mit einem 1:2-Addukt aus einem niedermolekularen Diepoxid und einem α,ω-Diol mit einem mittleren Molekulargewicht ≦ 2000 oder einem einwertigen Alkohol mit einem mittleren Molekulargewicht ≦ 300 ist, wobei das Diepoxid ein aromatischer Diglycidylether, ein aliphatisches oder cycloaliphatisches Diepoxid oder ein siliciumorganisches Diepoxid ist und ein mittleres Molekulargewicht ≦ 400 aufweist, und wobei das α,ω-Diol ein α,ω-hydroxyterminiertes Polyoxyalkylen (außer Polyethylenglykol), ein α,ω-hydroxyterminiertes Polybutadien, ein α,ω-hydroxyterminiertes organofunktionelles Polysiloxan oder ein α,ω-Alkandiol mit einem mittleren Molekulargewicht ≦ 200 ist.

2. Flüssiges, strahlenhärtbares Harz nach Anspruch 1, **dadurch gekennzeichnet,** daß das Diepoxid Bisphenol A- oder Bisphenol F-Diglycidylether, 1.2.7.8-Diepoxyoctan, 3.4-Epoxycyclohexylmethyl-3′.4′-epoxycyclohexancarboxylat oder Bis-(3-glycidoxypropyl)-tetramethyldisiloxan ist.

3. Flüssiges, strahlenhärtbares Harz nach Anspruch 1 oder 2, **dadurch gekennzeichnet,** daß das α,ω-Diol Polytetrahydrofuran, Polypropylenglykol, ein lineares Polydimethylsiloxan mit endständigen primären Hydroxyalkylgruppen, Ethylenglykol, 1.3-Propandiol, 1.4-Butandiol oder 1.10- Decandiol ist.

4. Flüssiges, strahlenhärtbares Harz nach einem der Ansprüche 1 bis 3, **dadurch gekennzeichnet,** daß die Hydroxylgruppen teilweise mit einem Isocyanat verkappt sind.

5. Isolation für dünne Leitungen, **dadurch gekennzeichnet,** daß sie aus wenigstens einem strahlengehärteten Harz nach einem oder mehreren der Ansprüche 1 bis 4 besteht.

6. Dünne Leitung, **gekennzeichnet durch** eine Isolation nach Anspruch 5.